(19) Europäisches Patentamt
European Patent Office
Office européen des brevets

(11) **EP 3 945 653 A1**

(12) **EUROPEAN PATENT APPLICATION**

(43) Date of publication:
**02.02.2022 Bulletin 2022/05**

(21) Application number: **20382699.5**

(22) Date of filing: **30.07.2020**

(51) International Patent Classification (IPC):
**H02J 3/00** $^{(2006.01)}$     **H02J 3/38** $^{(2006.01)}$

(52) Cooperative Patent Classification (CPC):
**H02J 3/388; H02J 3/0012; H02J 3/381;**
H02J 2300/28

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **The designation of the inventor has not
yet been filed**

(74) Representative: **Aspacher, Karl-Georg
Siemens Gamesa Renewable Energy GmbH & Co.
KG
Otto-Hahn-Ring 6
81739 München (DE)**

(54)    **DETECTION OF ISLANDING OPERATION**

(57)    A method of detecting an islanding operation of an electrical power generating system (100) coupled to a power grid (200) is provided. The method comprises monitoring a frequency ($\omega$L) that is indicative of an AC frequency on the power grid (200) and monitoring reactive power (Q) on a coupling of the electrical power generating system (100) to the power grid (200). The monitored frequency is processed to determine a rate of change of frequency (df/dt), and the monitored reactive power is processed to determine a rate of change of reactive power (dQ/dt). A detection parameter (ROCOFQ) is determined from the determined rate of change of frequency and the determined rate of change of reactive power. An islanding operation of the electrical power generating system (100) is detected if the detection parameter exceeds an islanding threshold value (903).

FIG 6

```
                    Start

   Monitor frequency ωL of power grid          601

   Monitor reactive power Q at the coupling      602
   to the power grid

   Determine df/dt and dQ/dt                     603

   Determine detection parameter ROCOFQ          604
   based on determined df/dt and dQ/dt

              605
   no      ROCOFQ >
   ◄─── passive islanding
           threshold?
              │ yes

   Islanding operation detected                  606

   Take mitigation action (adjust controller     607
   operation for islanding operation / stop
   operation of power generating system)

                    End
```

EP 3 945 653 A1

**Description**

FIELD OF THE INVENTION

The present invention relates to a method of detecting an islanding operation of an electrical power generating system, to a control system configured to perform a respective detection, and to a computer program for detecting islanding operation.

BACKGROUND

With the proliferation of power generation from renewable sources, power generation has become more decentralized and distributed power generating systems feed electrical power into the power grid. A major problem of such distributed generation is islanding, wherein a part of the grid becomes separated, and loads connected to this part are still energized by such power generating system. IEEE defines an island as "a condition in which a portion of an area of an electrical power system is energized solely by one or more local electrical power systems through the associated point of common coupling while that portion of the area of the electrical power system is electrically separated from the rest of the area electrical power system". Islanding operation needs to be detected quickly, as it can lead to dangerous situations. Several methods for detecting islanding operation have been suggested. These methods are classified in accordance with the communication that is required. On one hand, the remote methods rely on continuous communications between the power grid and the distributed generation. These methods are the most effective ones; however, their major drawback is their extremely high cost. On the other hand, local methods are employed that only rely on local measurements that are available. Such local methods do not require respective communications and are therefore more cost efficient.

Local detection methods can be divided into active and passive. The idea behind the active methods is that a small perturbation is applied, which will result in a significant change in system parameters in the event of islanding operation (e.g. voltage and frequency excursions). Such change resulting from the perturbation will be negligible under normal operation (it will be compensated by the power grid). For example, voltage and frequency fluctuations are continuously applied via a power control system. The main drawback of these active methods is the power quality erosion due to the intentionally introduced perturbations. To improve such methods, great efforts have been made in order to reduce the perturbation.

In contrast, passive methods do not deteriorate the power quality and are easy to implement. These methods focus on the natural effects of islanding operation by measuring local magnitudes such as voltage or frequency. The main drawback of these methods is the existence of a non-detection zone (NDZ) i.e. an interval in which the detection method fails to detect islanding operation once islanding occurs. For example, to prevent the other events, such as voltage dips, to be mistaken for islanding operation, threshold values for detecting islanding should be higher than the ones used for detecting voltage dips. Furthermore, in case of an islanding operation in which the power generation within the island matches the power demand, the islanding operation might not be detected (the measured parameters may stay within limits).

To avoid such problems, the NDZ can be minimized by reducing the threshold's value; however, as a result, the number of false positives when detecting islanding operation will increase. Hence, the number of trips (i.e. disconnection of the power generating system, e.g. of a wind turbine) will increase, resulting in an increased downtime and reduced power delivery. Therefore, defining the proper threshold is the main challenge of these methods.

It is therefore desirable to provide a better detection of islanding operation while maintaining the efficiency of respective power generating systems.

SUMMARY

Accordingly, there is a need to mitigate at least some of the drawbacks mentioned above and to improve the detection of islanding operation, in particular to reliably detect islanding and to better distinguish islanding from other grid events.

This need is met by the features of the independent claims. The dependent claims describe embodiments of the invention.

According to an embodiment of the invention, a method of detecting an islanding operation of an electrical power generating system coupled to a power grid is provided. The method comprises monitoring a frequency that is indicative of an AC frequency on the power grid; monitoring reactive power at the coupling to the power grid (e.g. at an output of the power generating system or a point of common coupling, PCC); processing the monitored frequency to determine a rate of change of frequency; processing the monitored reactive power to determine a rate of change of reactive power; determining a detection parameter from the determined rate of change of frequency and the determined rate of change of reactive power; and detecting an islanding operation of the electrical power generating system if the detection parameter exceeds an islanding threshold value.

Such detection parameter that is based on the rate of change of frequency and the rate of change of reactive power may provide a reliable indication of islanding operation. At the same time, it may provide a better distinction against other types of grid events, such as voltage dips. In particular, the method may detect when a portion of the power grid that is separated from the remaining power grid is solely energized by the electrical power generating system, i.e. is operating in an islanding condition. The detection parameter is already sensitive to a small power mismatch between the power provided by the power generating system and power demand of the consumers that are connected to the island. At the same time, the detection parameter is less sensitive to grid events. Accordingly, detection of islanding operation is improved.

Monitoring may for example occur by making respective measurements and deriving the monitored quantity from these measurements. For example, the monitored frequency may be derived from three phase voltage measurements at a connection to the power grid, e.g. at the PCC, and from a determination of the phase angle of the grid voltage based on the voltage measurements, for example by a synchronization method (e.g. phase locked loop - PLL). The frequency may be derived from such synchronization method, e.g. from such PLL. The reactive power may for example be determined based on a measurement of current at a power output of the power generating system, or at a connection to the power grid, and respective voltage measurements. The monitored quantity may be derived from these measurements.

In an embodiment, determining the detection parameter comprises forming a quotient of the rate of change of frequency and the rate of change of reactive power. Preferably, the rate of change of frequency is divided by the rate of change of reactive power to form the quotient.

For example, the detection parameter, which may be termed ROCOFQ, may be determined by the equation ROCOFQ = (df/dt)/(dQ/dt), wherein df/dt is the rate of change of frequency and dQ/dt is the rate of change of reactive power. By means of such determination, a detection parameter is obtained that provides a reliable discrimination between islanding events and other grid events.

Determining the rate of change of frequency may comprise deriving a rate of change from a monitored frequency value and one or more previously monitored frequency values, and taking an absolute value of said rate of change. Determining the rate of change of reactive power may likewise comprise deriving a rate of change from a monitored reactive power value and one or more previously monitored reactive power values, and taking an absolute value of said rate of change. In both cases, a delay element may for example be used to delay a monitored frequency/reactive power value, and the delayed value may then be subtracted from a respective current value. It is also possible to determine a derivative based on several samples, e.g. by averaging the differences between a certain number of consecutive samples.

Preferably, the rate of change of frequency is determined by using a predetermined first window length (e.g. determined from frequency values spaced apart by a first number of samples), and wherein the rate of change of reactive power is determined by using a predetermined second window length (e.g. determined from reactive power values spaced apart by a second number of samples), wherein the first window length is different from the second window length, in particular shorter than the second window length. The window length determines over which time period (e.g. number of samples) the rate of change is determined. As outlined above, respective delay elements may be employed for achieving respective window lengths, and the delayed value may be subtracted from the current value. By means of such different window sizes, the distinction between other grid events (e.g. voltage dip or load loss) and islanding operation can further be improved.

The first window length may for example lie between 0.2 ms and 4 ms, preferably 1 ms and 4 ms, e.g. at 2 ms (corresponding to 1-20 samples, 5-20 Samples, and 10 samples, respectively, at a discrete sample time of 200 microseconds). The second window length may lie between 2 ms and 20 ms, preferably 4 ms and 16 ms (corresponding to 10-100 samples, and 20-80 samples, respectively, at a discrete sample time of 200 microseconds). The first and/or second window length may in some embodiments correspond to a positive peak to negative peak time interval of the nominal AC voltage signal of the power grid, or to an (integer) fraction or multiple thereof. For example, for 50Hz grid frequency, the positive peak to negative peak time interval is 10ms, so the first/second window length may be 10ms, or 5ms. The window length can thereby be selected such that islanding operation can be better distinguished.

Processing the monitored frequency may further comprise filtering, preferably averaging, the monitored frequency prior to determining the rate of change of frequency. Also, processing the monitored reactive power may further comprise filtering, in particular averaging, the monitored reactive power prior to determining the rate of change of reactive power. The filter employed for such purpose may in particular be a smoothing filter, such as a running average filter, which can also be weighted to provide higher weight for more recent values. Such filtering avoids noise, thereby further reducing the chance for false detection of islanding.

The detection parameter may for example be determined as ROCOFQ = (abs($\omega$L-filt($\omega$L))/(abs(Q-filt(Q)), wherein $\omega$L = 2*pi*f is the monitored frequency in units of angular displacement per time, Q is the reactive power, abs(x) is an absolute value of the argument x, and filt(x) is a filtered, in particular delayed, value of the argument x.

Determining the detection parameter may further comprise buffering the determined rate of change of frequency for a first predetermined amount of time and using a minimum value of the buffered rate of change of frequency in the determination of the detection parameter, and/or buffering the determined rate of change of reactive power for a second predetermined amount of time and using a maximum value of the buffered rate of change of reactive power in the determination of the detection parameter. The detection parameter may then correspond to ROCOFQ = min(abs(ωL-filt(ωL))/max(abs(Q-filt(Q).)Preferably, the first predetermined amount of time is different from the second predetermined amount of time, in particular smaller than the second predetermined amount of time, although they may also be the same. The first predetermined amount of time may be 0.2 ms to 2 ms (1-10 samples at a discrete sample time of 200 microseconds). The second predetermined amount of time may be 10 ms - 160 ms, preferably 60 ms to 100 ms (corresponding to 50-800 samples, and 300-500 samples at a discrete sample time of 200 microseconds). By means of such buffering and taking the maximum/minimum value of the respective quantity, the effect of other grid events, such as voltage dips, on the detection parameter can be reduced further. For example, a voltage dip or spike on the power grid may cause voltage oscillations around 50 Hz (in particular in a DFIG solution), wherein by buffering the rate of change of reactive power value for a larger number of samples and taking the maximum value of these samples, such oscillations may be filtered out when determining the detection parameter (ROCOFQ). Likewise, when buffering the values of the rate of change of frequency for a (smaller) number of samples and taking the minimum value, spikes caused by sudden changes in frequency (e.g. disconnection of a large load) can be filtered out efficiently. A frequency drift caused by islanding is comparatively slow, so that it can be detected reliably. A detection parameter that better distinguishes between islanding operation and other grid events is thus obtained.

In an embodiment, the method further comprises operating in an active detection mode while monitoring the frequency and monitoring the reactive power, wherein the active detection mode comprises injecting a disturbance into electrical power provided by the power generating system to the power grid.

Preferably, the disturbance comprises or is a disturbance of an AC frequency of the electrical power provided by the power generating system to the power grid. It should be clear that such operation in the active detection mode may occur only temporarily, or may occur continuously. Such operation in the active detection mode may in particular be performed simultaneously with the other method steps, in particular the monitoring of frequency and reactive power and the determination of the detection parameter.

The disturbance may in particular be selected such that an effect that islanding operation has on the power grid is emphasized. For example, a frequency deviation and/or voltage deviation of from the nominal grid frequency/voltage may be emphasized by the disturbance if islanding operation is present. Under normal operating conditions, such disturbance is compensated by the grid and thus has only a minor effect on grid parameters. By such disturbance, the detection of the islanding condition by means of the detection parameter is thus further improved. By disturbing the AC frequency in case of islanding operation, the rate of change of frequency will increase, so that by means of the detection parameter, the islanding operation can be detected reliably.

Preferably, the method further comprises changing operation to the active detection mode if the detection parameter exceeds an activation threshold value. Accordingly, the disturbance may only be employed when it is required to provide a distinction against other grid events. In case of islanding operation, the disturbance will lead to a significant increase in the detection parameter, so that islanding can be detected. If the activation threshold is reached due to a different grid event, the disturbance will not have a respective effect on the detection parameter, so that no islanding is detected. It is accordingly beneficial if the activation threshold value is lower than the islanding threshold value.

A hybrid method can accordingly be implemented in which under normal conditions operation occurs in a passive detection mode, i.e. without injection of the disturbance. Therefore, power quality erosion due to the disturbance is not present during most of the time. Change into the active mode occurs only upon a respective indication by the detection parameter, so that other grid events can be reliably distinguished. It should be clear that operation may also occur in a purely passive detection mode, i.e. without any injection of a disturbance (and thus without an activation threshold).

In an embodiment, the power generating system comprises a power converter configured to control an AC frequency of the electrical power provided by the power generating system to the power grid. Injecting the disturbance may comprise controlling the power converter so as to disturb the AC frequency of the electrical power provided to the power grid. By controlling such converter, the disturbance can be generated efficiently.

In operation (i.e. during normal operation, in particular in the passive detection mode), the power converter is controlled by determining control parameters for the power converter in a rotating reference frame (d/q frame) that is synchronous with a grid frequency of the power grid. In the active detection mode, the disturbing of the AC frequency may comprise disturbing the determination of the control parameters such that the determined control parameters are no longer synchronous with the grid frequency. The control parameters may for example be determined in the d/q frame, and they may be a reference current (e.g. id_ref and iq_ref) or reference voltage (e.g. Vd_ref and Vq_ref). Such method allows an efficient injection of the disturbance.

That the reference frame is synchronous with the grid frequency may in particular mean that it is rotating synchronously with the grid voltage phase angle $\theta$. Derivation of reference control parameters in such rotating dq reference frame is commonly known in the field of converter control and is thus not explained in greater detail here.

The disturbance may be proportional to a change in the monitored AC frequency. It may for example be determined based on a difference between a current frequency value and a preceding frequency value (e.g., f(k) - f(k-1), f denoting the frequency and k denoting the current sample). Accordingly, the larger the frequency change becomes, the larger the disturbance becomes. If the power grid is connected, any frequency difference will be compensated and will remain small. If islanding occurs, the grid will no longer stabilize the frequency, which starts to drift, thus increasing the disturbance. Islanding can thus be detected fast and efficiently.

In an embodiment, the determination of the control parameters is disturbed by rotating the control parameters determined in the synchronous reference frame by a disturbance angle ($\theta_{SFS}$). For example, reference currents id_ref and iq_ref (or voltages) may be determined in the synchronous dq reference frame as control parameters, and the determined control parameters are then rotated by a transformation about a disturbance angle $\theta_{SFS}$. The disturbed (rotated) control parameters are then transformed back into the non-rotating (abc) frame and are applied in the control of the power converter. By such method, the AC frequency of the power provided by the power generating system can efficiently be disturbed while the synchronization dynamic is not affected (i.e. the rotating reference frame is synchronous with the grid phase angle).

The disturbance angle ($\theta_{SFS}$) is preferably applied directly as a transformation (rotation) to the reference control parameters. It may also be provided as part of an inverse Park transformation that transforms the reference control parameters back into a non-rotating reference frame (abc frame).

The method may further include applying a rate limitation to the disturbance angle when injecting the disturbance, e.g. by means of a rate limiter. Such rate limiter may keep a rate at which the disturbance is applied (i.e. increase in the disturbance angle by which the control quantities are rotated) below a threshold. This may avoid a sudden reduction in power quality when turning on the disturbance or when the disturbance angle increases quickly, it may for example reduce transients.

The disturbance may in particular correspond to a Sandia frequency shift (SFS).

In another embodiment, disturbing the determination of the control parameters comprises disturbing the determination of the rotating reference frame by an disturbance angle ($\theta_{FS}$ - FS abbreviating frequency shift) such that the rotating reference frame is no longer synchronous with the grid frequency. Again, the rotating reference frame may be a dq reference frame that is obtained from an abc frame via a respective Park transformation, which employs the phase angle $\theta$ of the grid voltage. By disturbing the synchrony between the grid and the rotating reference frame, an efficient disturbance of the control parameters determined in the reference frame and thus of the output of the power converter is achieved. Thereby, the AC frequency of the output power of the power generating system is disturbed, resulting in an improved detection of islanding operation.

Such method does not directly disturb the control parameters by means of which the power converter is controlled, but affects the synchronization. Thereby, the generation of active and reactive power transients when applying the disturbance can be avoided.

The determination of the rotating reference frame may for example be based on a phase angle of the grid voltage determined by means of a phase locked loop (PLL). Disturbing the determination of the rotating reference frame may comprise introducing the disturbance angle ($\theta_{FS}$) in the determination of the phase angle ($\theta$) by the phase locked loop. Accordingly, the disturbance can be introduced in an efficient way by only modifying the determination of the phase angle $\theta$ in the PLL. The remaining part of the control of the power converter can remain unmodified.

In an embodiment, the power generating system comprises a doubly fed induction generator (DFIG), wherein the power converter is coupled to a rotor of the doubly fed induction generator and is configured to control rotor currents in the rotor to thereby control the AC frequency of AC electrical power provided by the doubly fed induction generator to the power grid. Rotation of the rotor for example induces AC currents in the stator windings of the DFIG, the frequency of which is controlled by the rotor currents. The above mentioned control parameters may accordingly be current references for the rotor currents. By disturbing these current references, a disturbance is introduced into the AC frequency of the electrical power induced in the stator of the DFIG, which is provided to the power grid. As mentioned above, the rotor current references can be disturbed either by rotating the references in the dq frame or by disturbing the synchronization, i.e. the determination of the reference frame.

In particular, the AC frequency of the electrical power provided to the power grid may be disturbed by disturbing the rotational frequency of the flux vector of the DFIG rotor. In normal operation, the flux vector rotates synchronously with the grid frequency so that the electrical power induced in the stator of the DFIG is synchronous with the grid. By disturbing the rotation of the flux vector (in particular by the above outlined disturbances), the frequency of the AC electrical power induced in the stator windings is disturbed.

The power converter may in particular be an AC/AC converter having a rotor side converter and a grid side converter and may allow a bidirectional power flow. The control parameters may include current references for the rotor side converter of the power converter. It should be clear that the method is applicable both to direct torque control and current vector control of the power converter coupled to the DFIG.

A converter controller may for example be provided that controls a pulse width modulation (PWM) of the rotor side converter in accordance with the disturbed control parameters to achieve the desired rotor currents, which result in a rotating flux vector at the respective (disturbed) frequency. It should be clear that besides the introduction of the disturbance, the control of the power converter and of the DFIG may occur according to any conventional and known method, which may for example measure the actual rotational position of the DFIG rotor and use this in the determination of the control parameters, i.e. the rotor current references ird_ref and irq_ref.

In another embodiment, the power converter is a full power converter coupled to an output of a generator and configured to convert the power generated by the generator. The power converter comprises a grid side converter, wherein the disturbance comprises a disturbance of the AC frequency of AC electrical power provided by the grid side converter to the power grid. In such configuration, the power converter directly outputs the electrical power at a controllable AC frequency, so that the disturbance directly influences the AC frequency of the AC electrical power provided to the power grid. In such full converter solution, the power converter generally converts the largest part of the power generated by the generator, e.g. more than 90%, in particular almost 100%.

The converter may in particular be a back to back converter with an intermediate DC link. The grid side converter is operated as an inverter that converts DC electrical power received from the DC link to the AC electrical power provided to the power grid. The control parameters of the power converter may accordingly be current or voltage references for the grid side converter, which are disturbed in any of the above-outlined ways. A converter control may employ these references for controlling semiconductor switches of the grid side converter in accordance with a PWM scheme.

In an embodiment, the method further comprises, upon detecting the islanding operation, the taking of at least one mitigation measure. Such measure may include adjusting the settings of the power generating system and/or performing a (controlled) shutdown of the power generating system. Adjusting the settings of the power generating system may include the changing of the operation of the power generating system to an islanding mode that operates to stabilize frequency and voltage on the grid, e.g. by matching the power supplied by the power generating system to the load on the island, which may also involve load shedding. The voltage and frequency on the island grid may thus be kept stable. Performing a shutdown may include entering into a safe mode of operation and shutting down the power generating system so as to avoid any dangerous situations on the islanded grid.

According to a further embodiment of the invention, a control system for detecting an islanding operation of a power generation system is provided. The control system is configured to perform any of the methods described herein,and is preferably a wind turbine or a wind farm. The control system may in particular perform the monitoring of the frequency and reactive power (in particular by making corresponding measurements, such as of grid voltages and currents at the output of the power generating system), the processing of the monitored quantities, the deriving of the detection parameter, and the comparing to the islanding threshold. It may further be configured to change operation into the active detection mode and to control the introducing of the disturbance, e.g. by providing a respective control of a power converter of the power generating system in any of the above-described configurations. By means of such control system, advantages similar to the ones outlined further above may be achieved.

The control system may include a processing unit and a memory coupled to the processing unit, wherein the memory stores control instructions which, when executed on the processing unit, cause the control system to perform any of the methods described herein. The control system may implement a PLL unit configured to derive, from measurements taken on a connection to the power grid, a current phase angle of the power grid (and thus a frequency of the power grid), a detection unit that performs the above monitoring, the derivation of the detection parameter and the comparison to the threshold. It may further include a reference determination unit that determines control parameters for controlling the power converter, and a disturbance unit that disturbs the determination of the control parameters in any of the above-mentioned ways. It may further comprise a measurement unit that provides the necessary measurements for determining the detection parameter.

According to a further embodiment of the invention, a power generating system that comprises such control system is provided. The control system is coupled to the power generating system to control the power generating system. The power generating system may further comprise the above-mentioned power converter. It may in some embodiments further comprise the generator, e.g. the DFIG or a generator of a full converter (FC) solution, such as a permanent magnet synchronous generator (PMSG).

According to a further embodiment, the electrical power generating system is a wind turbine. The electrical power generating system may also be a wind farm comprising plural wind turbines. It should be clear that other embodiments are conceivable, the power generating system may for example be a solar power plant or the like. In this case, no generator may be present, and the power converter may only comprise a grid side converter.

According to a further embodiment of the invention, a computer program for detecting an islanding operation of a power generating system is provided. The computer program comprises control instructions which, when executed by a processing unit of a control system controlling such power generating system, cause the control system to perform any of the methods described herein. The computer program may be provided as a computer program product.

A further embodiment relates to a volatile or non-volatile storage medium that comprises the computer program, i.e. that comprises the respective control instructions.

It should be clear that the control system may be configured to perform any of the methods described herein. Further, the detection method may be performed by the control system in any of the configurations described herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

BRIEF DESCRIPTION OF THE DRAWINGS

The forgoing and other features and advantages of the invention will become further apparent from the following detailed description read in conjunction with the accompanying drawings. In the drawings, like reference numerals refer to like elements.

Fig. 1 is a schematic drawing illustrating an islanding operation of a power generating system.

Fig. 2 is a schematic drawing showing a power generating system comprising a control system according to an embodiment of the invention.

Fig. 3 is a schematic drawing showing the determination of the detection parameter ROCOFQ according to an embodiment of the invention.

Fig. 4 is a schematic drawing showing the disturbance of control parameters of a power converter in an active detection mode according to an embodiment of the invention.

Fig. 5 is a schematic drawing showing the disturbance of control parameters of a power converter in an active detection mode according to a further embodiment of the invention.

Fig. 6 is a schematic flow diagram illustrating a passive detection method according to an embodiment of the invention.

Fig. 7 is a schematic flow diagram illustrating an active detection method according to an embodiment of the invention.

Fig. 8 is a schematic flow diagram illustrating a hybrid detection method according to an embodiment of the invention.

Fig. 9 is a schematic diagram illustrating the detection parameter ROCOFQ for different grid conditions.

Fig. 10 is a schematic diagram illustrating a power generation system according to an embodiment of the invention.

DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

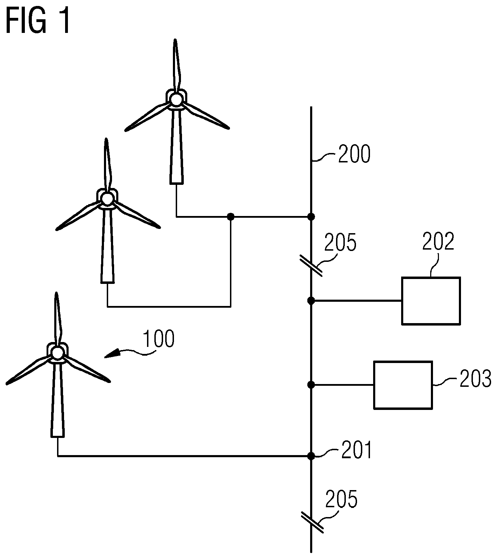

Fig. 1 schematically illustrates an islanding operation of a power generating system 100 that may be connected to the power grid 200 at a point of common coupling (PCC) 201. The power generating system 100 may for example be a single wind turbine, it may also comprise plural wind turbines, a solar power plant, and any other kind of distributed power generator. Loads 202 and 203 may be connected to power grid 200 to receive electrical power. Islanding occurs for example if at positions 205, the connection to the remaining power grid is lost (e.g. by opening of respective circuit breakers, grid faults or the like) and the loads 202, 203 are solely supplied with electrical power by power generating system 100. In such situation, voltage and frequency on the 'island' are no longer stabilized by the grid, and can vary substantially if there is a mismatch between the power generation and the power demand. This can lead to dangerous situations. On the other hand, such islanding is difficult to detect if power generation and demand are approximately the same in such islanding operation.

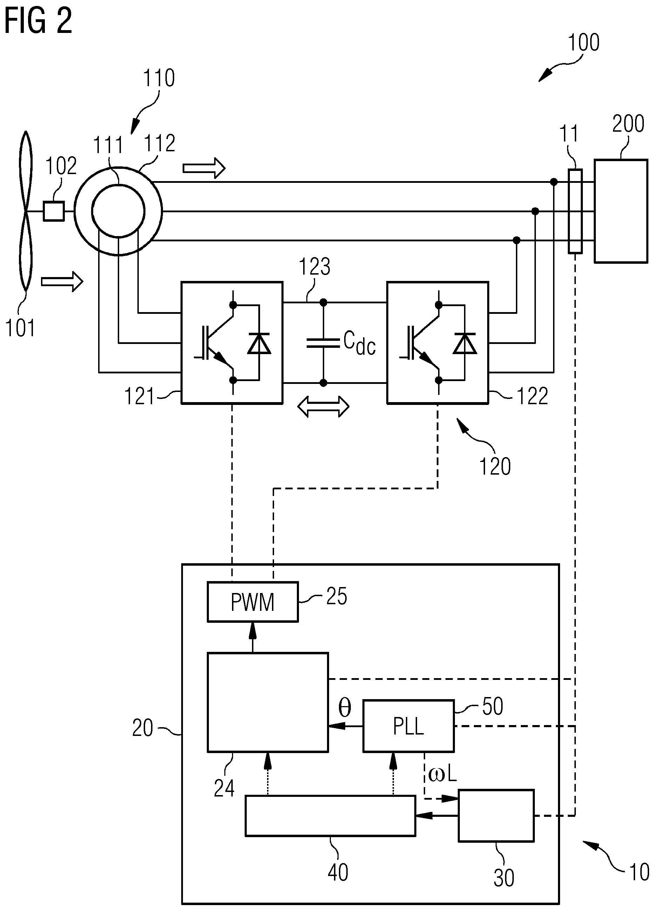

Fig. 2 schematically illustrates a particular implementation of the power generating system 100 as a wind turbine. As outlined above, other implementations are conceivable. The power generating system 100 may include a control system 10 that is coupled to a power converter 120. The power converter 120 may control or may be configured to control the parameters of the AC electrical power that the power generating system 100 supplies into the power grid 200, in particular the AC frequency. The wind turbine (WT) may comprise a WT rotor 101 with rotor blades which may be rotationally coupled via a gear box 102 to a generator 110. In the example of Fig. 1, the generator 110 is a DFIG that includes a rotor 111 with respective rotor windings and a stator 112 with respective stator windings. Power converter 120 may be connected to the rotor windings to control rotor currents ir in rotor 111. Rotation of the energized rotor causes induction of AC electrical power in the stator windings at a frequency determined by the rotation frequency of the rotor flux vector (which is determined by the mechanical rotation of the rotor and the frequency of the rotor currents). In normal operation, the rotation of the flux vector may therefore be synchronized to the grid frequency by control of the rotor currents. In that sense, operation of the DFIG 110 can correspond to the conventional DFIG operation.

In such normal operation, a larger fraction of the generated electrical power may be provided by the stator 112 to the power grid 200, and a smaller fraction (e.g. <30%) may be provided by the rotor 111 via the power converter 120, which accordingly may enable bidirectional power flow.

The power converter 120 may include the grid side converter 122 and the rotor side converter 121, both of which may be controlled by a controller 20 of the control system 10. They may be coupled by an intermediate DC link 123.

The controller 20 may include control circuitry and may further include a processing unit and a memory. Some of the functions of controller 20 described herein may be implemented in hardware, while other functions may be implemented in software in form of control instructions running on the processing unit of controller 20. The processing unit may be implemented as a digital signal processor (DSP), application specific integrated circuit (ASIC), as a microprocessor or the like. The memory of controller 20 may comprise flash memory, RAM, ROM, a hard disk drive and the like. The memory may store respective control instructions, for example in the form of a computer program, which are executed by the processor and which, when executed, perform any of the methods disclosed herein. Controller 20 may comprise further components, such as input/output interfaces, for example for receiving sensor signals from a measurement unit 11 for measuring parameters related to the power grid 200 and the power generating system 100, and for providing control signals to the power converter 120. It may further include a user interface for receiving user input and for providing information, such as present operating conditions, to a wind turbine operator.

Measurement unit 11 may provide different measurements, and it may take such measurements at different points of the power generating system 100. It may for example measure voltages (for the three phases) on the coupling to the power grid 200, e.g. at or adjacent to the PCC 201. It may further measure currents supplied by the power generating system 100, e.g. at a power output of the wind turbine or the like. It may in particular make any measurements necessary for the determination of the quantities described herein and may use any measurement methods known in the art.

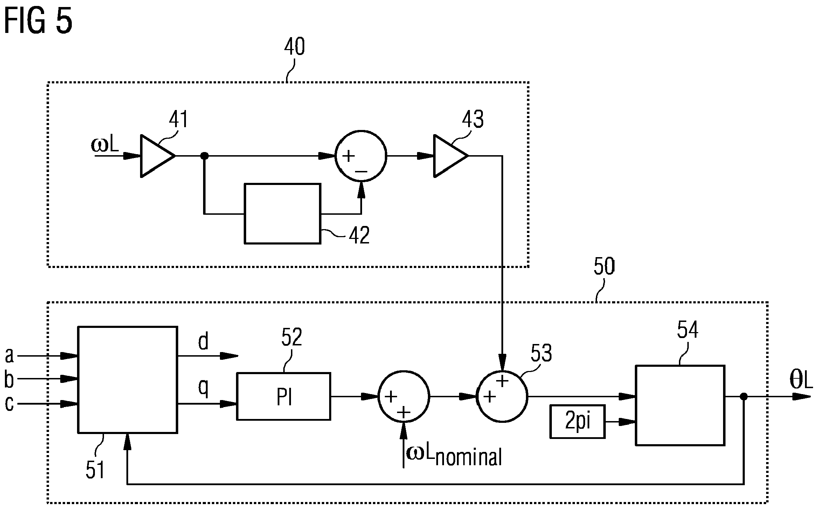

Controller 20 may implement a phase locked loop (PLL) unit 50 that may receive from measurement unit 11 measured grid voltages for the three phases and determines therefrom the phase angle $\theta$ of the grid voltage in any conventional way (see also figure 5). Phase and frequency of the grid voltage may thus precisely known and may be used by reference determination unit 24 in the determination of reference currents for the rotor 111. Reference determination unit 24 may implement vector control or direct torque control for the DFIG 110. In the example of figure 2, the reference determination unit 24 may for example obtain measured output currents for the three phases from the measurement unit 111 and, using the phase angle $\theta$, may transform these into a rotating d/q frame that may rotate synchronously with the grid frequency, e.g. by using a respective Park transformation. Reference control parameters may then be determined in the d/q frame by using setpoints for the rotor currents ird and irq and by using PI (proportional integral) control. The reference determination unit 24 can thus derive in the synchronous rotating d/q reference frame reference values ird ref (d-axis rotor current reference) and irq_ref (q-axis rotor current reference) for the rotor current. Using an inverse Park transformation (again with angle $\theta$), the current references may then be transformed back into the non-rotating abc-frame and are applied to the rotor 111. This may occur via a respective PWM-controller 25 that controls semiconductor switches in the rotor side converter 121 to impart the respective currents to the rotor 111. It should be clear that the above explanation is shortened, as such DFIG control is generally known.

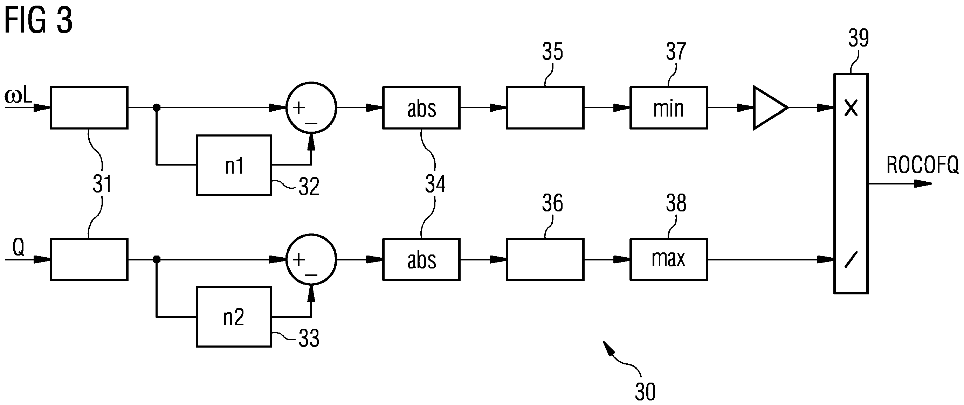

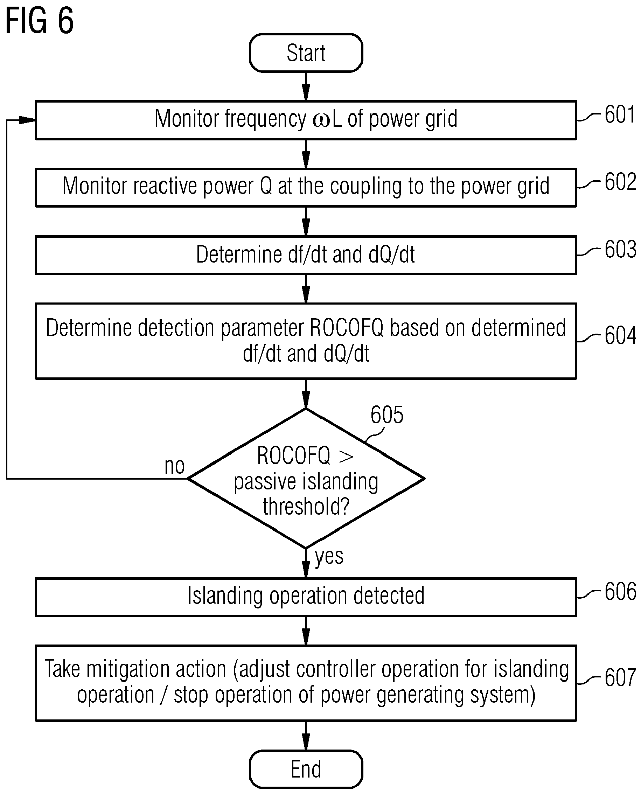

The controller 20 may comprise an additional detection module 30, which may be implemented by the above mentioned processing unit and control instructions. The detection module 30 may be configured to detect islanding operation of the power generating system 100. Operation of the detection module is illustrated in figures 3 and 6. Turning to Fig. 6, the method may start, in step 601, with monitoring the frequency $\omega L$ of the power grid. Detection module 30 may measure the frequency itself via measurement unit 11. However, it is more efficient to obtain the frequency from the PLL module 50 that determines the frequency very precisely by determining the phase angle $\theta(t)$ of the grid voltage. In step 602, the reactive power Q may be monitored at the coupling to the power grid. The reactive power Q may be obtained based on measurements taken by measurement unit 11 at the coupling to the power grid, e.g. by measurements of current/voltage at the output of the power generating system 100 or at the PCC 201. In step 603, the detection module 30 may determine, i.e. calculate, from the monitored $\omega L$ and Q values the rate of change of frequency (df/dt) and the rate of change of reactive power (dQ/dt). As a detection parameter, the rate of change of frequency over rate of change of reactive power (ROCOFQ) may be then determined in step 604. As outlined above, the detection parameter may be determined based on the equation ROCOFQ = (df/dt)/(dQ/dt).

A particular implementation of the detection parameter is illustrated in figure 3. A discrete filter 31 may be first employed for filtering the monitored quantities $\omega L$ and Q. Filter 31 may smooth the signals to reduce noise, it may for example be a running average. Each signal $\omega L$ and Q may be then provided to a respective delay element 32, 33 which may delay the signal for a predetermined amount of time, for example for a certain number of samples n1 and n2. The delayed signal value may be then subtracted from the current signal value to determine the rate of change. For example, $\Delta\omega L = \omega L(k) - \omega L(k\text{-}n1)$ and $\Delta Q = Q(k) - Q(k\text{-}n2)$, wherein k denotes the current sample. This corresponds to a window of length n1, n2 over which the rate of change may be determined for $\omega L$ and Q, respectively. These window lengths/delays can be the same, yet preferably, they may be different. In particular, n1 may be smaller than n2. The first window length may for example lie between 0.2 ms and 4 ms, preferably 1 ms and 4 ms, e.g. at 2 ms (corresponding to 1 and 20 samples, preferably 5 and 20, e.g. at 10 samples, at a discrete sample time of 200 microseconds). The second window length may lie between 2 ms and 20 ms, preferably 4 ms and 16 ms (corresponding to 10-100 samples, preferably 20-80 samples, at a discrete sample time of 200 microseconds). It should be clear that the window lengths may correspond to a different number of samples if different discrete sample times (i.e. different sampling rates) are employed. For example, for the second window length, n2=50 samples may be employed (corresponding to 10 ms), which may correspond to the positive peak-negative peak time interval of a 50 Hz signal, in order to maximize the signal for such 50 Hz oscillations. As another example, if islanding operation should be differentiated in unbalanced conditions (100Hz oscillation), a second window length of n2 = 25 samples may be employed, corresponding to 5 ms and thus to the positive peak-negative peak time interval of the 100Hz oscillation (if the discrete sample time was 100 microseconds, 50 samples would have to be employed). The distinction between islanding operation and other grid events can thereby be improved.

Elements 34 may provide an absolute value of the respective rate of change. Buffers 35, 36 may be furthermore provided to buffer the respective rate of change for a certain amount of time, for example for a certain number of samples. Element 37 may then output the minimum of the buffered rate of change of frequency. Thereby, sudden changes in frequency, which correspond to other grid events such as load shedding events or grid faults, can be removed efficiently. Element 38 may provide the maximum value of the buffered rate of change of reactive power. Oscillations in the reactive power, which may for example occur around the nominal grid frequency upon occurrence of a voltage dip on the grid (in particular in a DFIG solution), can thereby be removed efficiently. The length of buffer 35 for $\Delta\omega L$ may be shorter than for the buffer 36 for $\Delta Q$. For example, buffer 35 may provide buffering for a first predetermined amount of time, e.g. 1-10 samples, and buffer 36 may provide buffering for a second predetermined amount of time, e.g. 50-800, preferably 300-500 samples. A predetermined (fixed) gain may further be applied to one or both signals (as indicated by the triangle) to make the signals comparable.

Element 39 may then put the determined rate of change of frequency into relation with the determined rate of change of reactive power. This may occur by means of forming a quotient, preferably by dividing the rate of change of frequency by the rate of change of reactive power. The determination outputs the detection parameter ROCOFQ. It should be clear that figure 3 illustrates one possibility of determining the detection parameter, and that variations are possible, for example by changing/removing the filtering 31, or by not using the buffering 35, 36 and the minimization/maximization 37, 38.

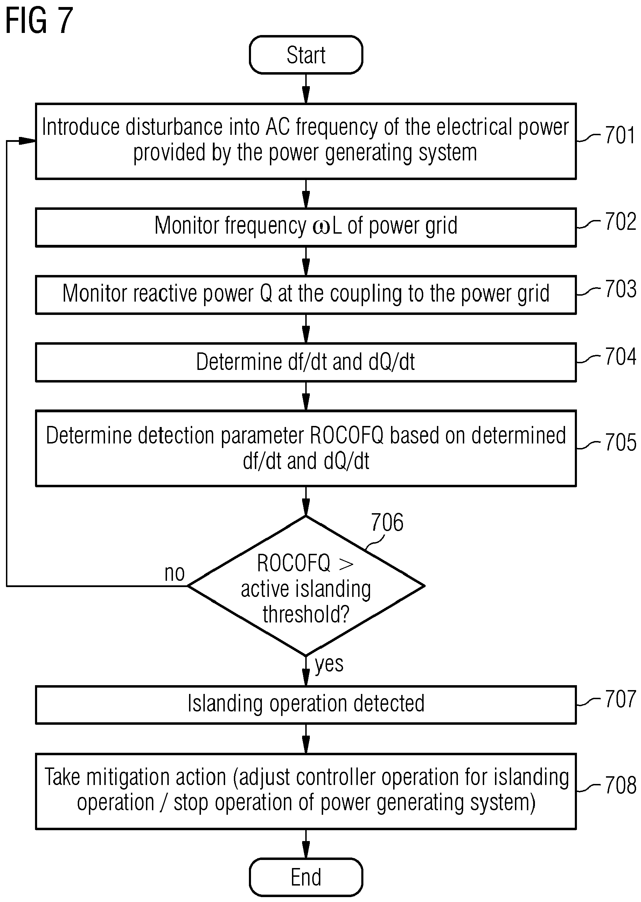

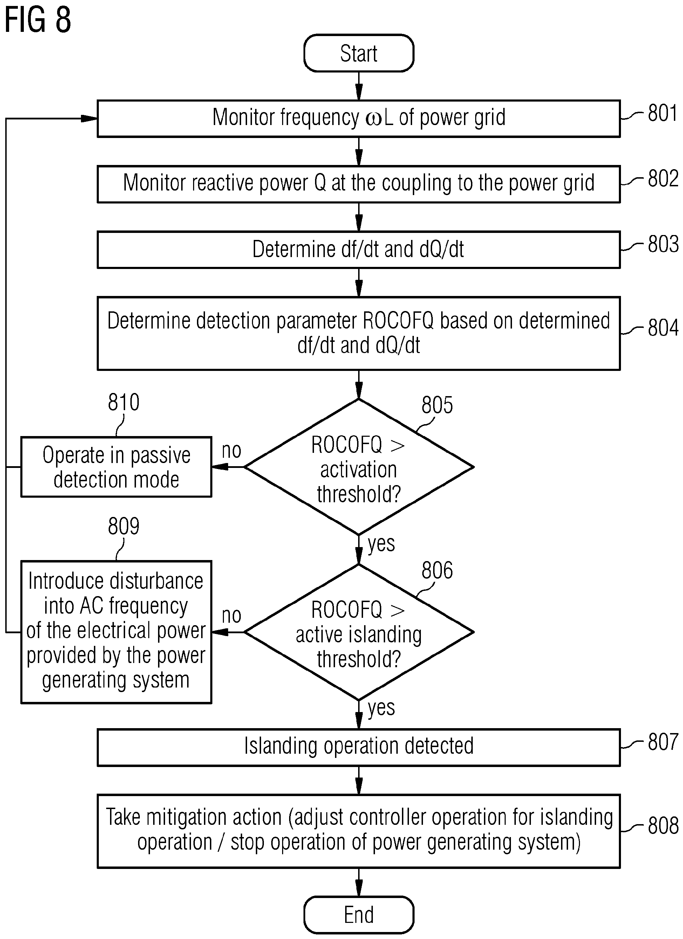

Turning back to figure 6, the detection parameter may be determined in step 604. Figure 6 illustrates a passive detection method; however, the above explanations and the determination of the detection parameter are similarly applicable to the further embodiments of figures 7 and 8, which illustrate active and hybrid detection methods, respectively. The determined detection parameter may be then compared in step 605 to a passive islanding threshold. The threshold may be set such that islanding can be detected reliably while for other grid events, the detection parameter may not exceed the threshold. It should be clear that the threshold may need to be determined individually for each power generating system, as it depends on the type of power generating system and the properties of the grid coupling and the power grid. It may for example be determined by simulating islanding operation and by simulating different grid events and selecting the threshold such that it lies between the ROCOFQ values for islanding and for the other grid events.

If the islanding threshold is not exceeded in step 605, the method may continue with step 601. If the threshold is exceeded, it may be determined that islanding operation is present (step 606). In step 607, one or more mitigation actions may be then taken. This may include the shutting down of the power generating system 100 in a safe mode. It may also involve a continued operation of the power generating system 100 with operating parameters that may be adjusted for islanding operation, that may for example stabilize voltage and frequency on the island grid.

Turning back to Fig. 2, the methods described above with respect to figures 3 and 6 may be implemented in the control system 10, and in particular in the detection unit 30 of the controller 20. This determination of the detection parameter and comparison to the islanding threshold may be performed continuously during the operation of the power generating system 100. Such operation may correspond to a passive detection mode in which islanding detection relies on the measurement of local parameters. Control system 20 may also be operated in an active detection mode or a hybrid detection mode. For this purpose, a disturbance module 40 may be provided and may be operable to disturb the AC frequency of the AC electrical power provided by power generating system 100 to the power grid 200. Several possibilities for injecting such disturbance are conceivable. In the example of figure 2, the disturbance module 40 may inject the disturbance by disturbing the determination of the control parameters, in particular the rotor current references, by means of which the power converter 120 may be controlled. The disturbance may for example be injected into the PLL module 50 by disturbing the determination of the phase angle θ and thus of the synchronous d/q reference frame. Additionally or alternatively, the disturbance may be injected into the reference determination module 24 by directly disturbing the reference control parameters.

An example of an operation in such active detection mode is illustrated in the flow diagram of figure 7. Steps 702-705 correspond to steps 601-604 of the passive detection mode, i.e. the determination of the detection parameter may be performed the same way. Steps 707 and 708 correspond to steps 606 and 607 of figure 6. Only the differences will therefore be explained. In the active detection mode of figure 7, a disturbance may be introduced into the AC frequency of the electrical power provided by the power generating system 100 (step 701), in particular by disturbance module 40.

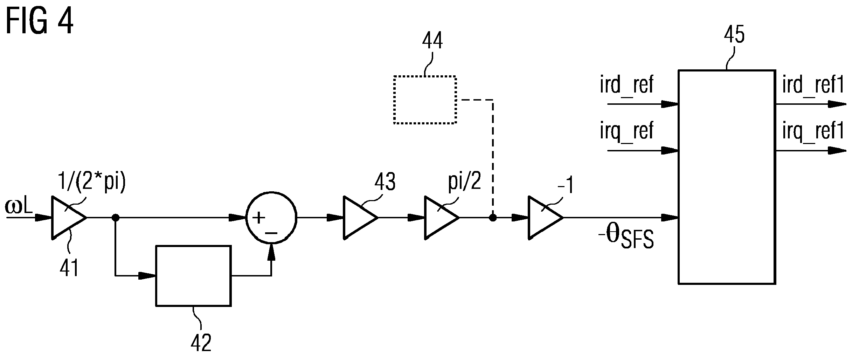

A first possibility of introducing the disturbance is illustrated in figure 4. The disturbance may be proportional to a frequency deviation of the AC frequency of the power grid, and it may be injected in form of a disturbance angle which may be essentially added in the rotating reference frame to the angle θ. In gain element 41, the angular frequency ωL, which may be again either measured or obtained from the PLL module 50, may be transformed to a frequency value f. A discrete filter 42 filters and in particular buffers the frequency value, which may be then subtracted from a current frequency value to obtain the frequency change (or frequency deviation) f(k)-f(k-1), wherein k denotes the current sample. A gain 43 may be then applied to this frequency deviation, which may correspond to an acceleration gain that allows an adjustment of the size of the disturbance. After further operations, the disturbance angle $\theta_{SFS}$ may be finally obtained from the frequency deviation. In particular, it may be obtained as:

$$\theta_{SFS} = - \; gain \; * (fL - filt(fL)),$$

wherein fL = ωL/2pi, filt(x) designates the filtering operation by unit 42, and *gain* designates the gain by element 43. As outlined above, the reference determination module 24 may determine the control parameters in form of the d-axis rotor current reference ird_ref and the q-axis rotor current reference irq_ref. A rotation module 45 may now be used to rotate these references in the d/q frame by the angle $\theta_{SFS}$ to thereby disturb these references. The disturbed references may be determined by the rotation:

$$ird\_ref1 = ird\_ref*cos(-\theta_{SFS}) + irq\_ref*sin(-\theta_{SFS});$$

and

$$irq\_ref1 = -ird\_ref*sin(-\theta_{SFS}) + irq\_ref*cos(-\theta_{SFS}).$$

The rotated/disturbed control parameters ird_ref1 and irq_ref1 may then be transformed back into the abc frame (inverse Park transformation) and may be used the conventional way for controlling the operation of the power converter 120. As the rotor currents are disturbed, the AC frequency generated by the DFIG 110 and thus by the power generating system 100 may be disturbed and is no longer synchronous with the grid frequency. As the disturbance angle may be proportional to the frequency deviation, the disturbance may increase in each step if the AC frequency is not stabilized by the connected power grid, i.e. if islanding operation is present.

Optionally, a rate limiter 44 may be provided that limits the rate at which the disturbance is introduced, in particular at which the disturbance angle $\theta_{SFS}$ grows. Unwanted fast disturbance of the AC frequency may be avoided and transients due to the introduction of the disturbance may be reduced.

A second possibility of introducing the disturbance is illustrated in figure 5. The disturbance may be again proportional to a frequency deviation of the AC frequency of the power grid. Accordingly, the disturbance unit 40 may again comprise the components 41, 42 and 43 as well as the further calculation steps (not shown) for determining the disturbance angle. The above explanations are thus equally applicable. The disturbance angle, here designated as $\theta_{FS}$ (FS - frequency shift), may be in contrast not used for rotating the control parameters, but may be introduced into the PLL module 50 to disturb the determination of the phase angle θ of the grid voltage. The PLL module 50 may implement a phase locked loop that is schematically illustrated in figure 5 and that may operate the conventional way. In particular, the unit 51 may receive measurements of the voltage at the point of common coupling PCC (a, b, c) and may perform the Park transformation into the d/q reference frame using the phase angle θ determined in the loop. Unit 51 may detect the phase error (which corresponds to the q component, the d component being set to zero) which may be supplied to PI controller 52 that may estimate a correction, to which the nominal operating frequency $\omega L_{nominal}$ may be added. By adder 53, the disturbance angle $\theta_{FS}$ may be furthermore added to disturb the determination of the phase angle. The discrete integrator 54 then may give out the disturbed phase angle θL of the grid voltage.

Again, the gain of the disturbance can be adjusted by gain element 43. The disturbed phase angle may then be used by reference determination unit 24 for determining the control parameters for controlling the converter 120. It may for example be used for transforming the measured currents at the output of the power generating system into the d/q reference frame by means of the Park transformation. As the angle 9L used in the transformation may be disturbed, the reference frame is no longer synchronous with the grid frequency, and the determined control parameters (ird ref and irq_ref) may be likewise disturbed and no longer result in the generation of AC electrical power that is synchronous with the power grid 200. Likewise, as the disturbance may be proportional to the frequency deviation, it may increase with increasing frequency deviation. Consequently, in islanding operation, in which the power grid 200 does not compensate such (small) deviations, the frequency deviations increase quickly, which can be detected by detection module 30.

It should be clear that each of the methods described in figures 4 and 5 can be used in the disturbance module 40, and that both methods may also be used together.

Turning back to figure 7, after introducing the disturbance in step 701, the detection parameter may be determined in steps 702-705, as described above. In step 706, it may be checked if the detection parameter exceeds an active islanding threshold. As the disturbance is introduced, the detection parameter reacts stronger to an islanding operation (the AC frequency deviates quickly from the nominal value). Accordingly, the active islanding threshold can be set to higher values than the passive islanding threshold of Fig. 6. Thereby, the detection of false positives due to other grid events can be further reduced, which is a significant advantage. Again, the threshold should be determined in dependence on the prevailing grid conditions.

If no islanding is detected in step 706, operation may continue in the active mode. Otherwise, the presence of islanding may be determined (step 707) and mitigation measures can be taken (step 708).

The method of introducing the disturbance (figure 4) has the advantage that the dynamic performance of the synchronization method is not affected. On the other hand, the method of figure 5 has the advantage that no active/reactive power transients are introduced by the disturbance, so that the power quality remains quite high.

Figure 8 illustrates a further method that may be implemented by the control system 10 of figure 2. The method of figure 8 is a hybrid method in which the disturbance may only be activated when required. In steps 801-804, the detection parameter may be determined, as described with respect to figure 3 and to steps 601-604 of figure 6. In step 805, it may be determined if the detection parameter exceeds an activation threshold value. If not, operation may continue in the passive detection mode (step 810), in which no disturbance may be introduced, with the determination of the detection parameter in steps 801 to 804.

If the activation threshold is exceeded in step 805, it may be checked if the active islanding threshold is exceeded in step 806. If this is not the case, a disturbance may be introduced into the AC frequency of the electrical power generated by the power generating system 100 (step 809). Step 809 corresponds to step 701 of figure 7, and the above explanations are equally applicable. In particular, the disturbance may be introduced in accordance with the methods described with respect to figures 4 and/or 5. Accordingly, the system now changes operation from the passive detection mode (no disturbance) into the active detection mode (including disturbance). Operation may then continue with the determination of the detection parameter in steps 801-804. If the detection parameter then drops below the activation threshold, as detected in step 805, operation may then continue again in the passive detection mode (step 810).

If in step 806, the detection parameter exceeds the active islanding threshold, it may be determined that islanding operation is present (step 807), and mitigation measures may be taken (step 808), as outlined above. Again, by introducing the disturbance, the islanding mode can better be distinguished from other grid events and can be detected reliably by means of the detection parameter. On the other hand, the disturbance may only be introduced if the detection parameter exceeds the activation threshold (step 805), so that operation can mostly occur in the passive detection mode and thus without any deterioration of the quality of the generated electrical power. The activation threshold may accordingly be set lower than the active islanding threshold but high enough so that the disturbance is started quickly if the detection parameter indicates that there may be an islanding operation. The whole detection process may be performed in less than 2 seconds, it may be performed in less than 1 second.

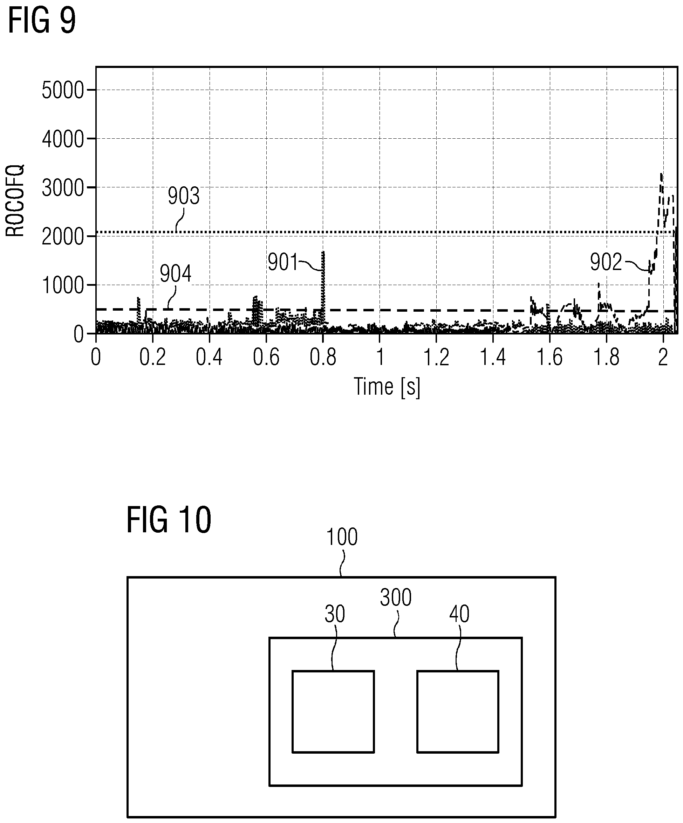

Figure 9 illustrates an example of the detection parameter ROCOFQ for two situations. The curve 901 indicates a situation in which a grid event occurs, in particular a voltage dip on the grid. As can be seen, the parameter ROCOFQ exceeds an activation threshold 904 upon which a disturbance is injected. It does however not exceed the active islanding threshold 903. Accordingly, a disturbance is temporarily injected, but no islanding and thus no false positive is detected. Curve 902 illustrates an islanding situation. Upon ROFOCQ exceeding the activation threshold 904, a disturbance is injected, which results in a further rising of the value of the detection parameter, as the frequency on the island grid is driven away from the nominal operating frequency. The active islanding threshold value 903 is finally exceeded, so that islanding operation is reliably detected.

Figure 10 depicts a power generating system 100 which may comprise a islanding detection system 300 that may comprise a detection module 30 and a disturbance module 40 according to any of the disclosed examples.

It should be clear that several modifications can be made to the above described embodiments. For example, the embodiments are described with respect to the control of a power converter coupled to a DFIG. However, the teachings are not limited to such implementation but may likewise be applied to full converter solutions, in which a back to back converter is connected to the wind turbine generator to convert essentially all power generated by the generator. The grid side converter that determines the AC frequency of the output electrical power may then be controlled accordingly, in particular by injecting a respective disturbance into the synchronization method or by directly rotating the reference control parameters (e.g. reference current or reference voltage) by which the converter is controlled. In even further implementations, the power converter may only include a grid side converter, i.e. an inverter, which may for example be supplied with electrical power from a DC power source, e.g. from photovoltaic modules. Such grid side converter may be controlled correspondingly.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

**Claims**

1. A method of detecting an islanding operation of an electrical power generating system (100) coupled to a power grid (200), wherein the method comprises:

   - monitoring a frequency ($\omega L$) that is indicative of an AC frequency on the power grid (200);
   - monitoring reactive power (Q) on a coupling of the electrical power generating system (100) to the power grid (200) ;
   - processing the monitored frequency to determine a rate of change of frequency (df/dt);
   - processing the monitored reactive power to determine a rate of change of reactive power (dQ/dt);
   - determining a detection parameter (ROCOFQ) from the determined rate of change of frequency and the determined rate of change of reactive power; and
   - detecting an islanding operation of the electrical power generating system (100) if the detection parameter exceeds an islanding threshold value (903).

2. The method according to claim 1, wherein determining the detection parameter comprises forming a quotient of the rate of change of frequency (df/dt) and the rate of change of reactive power (dQ/dt).

3. The method according to claim 1 or 2, wherein the rate of change of frequency is determined by using a predetermined first window length (n1), and wherein the rate of change of reactive power is determined by using a predetermined second window length (n2), wherein the first window length (n1) is different from the second window length (n2), in particular shorter than the second window length.

4. The method according to any of the preceding claims, wherein determining the detection parameter (ROCOFQ) further comprises buffering the determined rate of change of frequency for a first predetermined amount of time and using a minimum value of the buffered rate of change of frequency in the determination of the detection parameter, and/or buffering the determined rate of change of reactive power for a second predetermined amount of time and using a maximum value of the buffered rate of change of reactive power in the determination of the detection parameter, wherein preferably, the first predetermined amount of time is smaller than the second predetermined amount of time.

5. The method according to any of the preceding claims, wherein the method further comprises operating in an active detection mode while monitoring the frequency ($\omega L$) and monitoring the reactive power (Q), wherein the active detection mode comprises injecting a disturbance ($\theta_{SFS}$, $\theta_{FS}$) into electrical power provided by the power generating system (100) to the power grid (200), wherein the disturbance preferably comprises a disturbance of an AC frequency of the electrical power provided by the power generating system (100) to the power grid (200).

6. The method according to claim 5, wherein the method further comprises changing operation to the active detection mode if the detection parameter (ROCOFQ) exceeds an activation threshold value (904), wherein preferably, the activation threshold value (904) is lower than the islanding threshold value (903).

7.  The method according to claim 5 or 6, wherein the power generating system (100) comprises a power converter (120) configured to control an AC frequency of the electrical power provided by the power generating system (100) to the power grid (200), wherein injecting the disturbance comprises controlling the power converter (120) so as to disturb the AC frequency of the electrical power provided to the power grid (200) .

8.  The method according to claim 7, wherein in operation, the power converter (120) is controlled by determining control parameters (ird_ref, irq_ref) for the power converter (120) in a rotating reference frame that is synchronous with a grid frequency of the power grid, wherein in the active detection mode, the disturbing of the AC frequency comprises disturbing the determination of the control parameters (ird_ref, irq_ref) such that the determined control parameters are no longer synchronous with the grid frequency.

9.  The method according to claim 8, wherein the determination of the control parameters (ird_ref, irq_ref) is disturbed by rotating the control parameters determined in the synchronous reference frame by a disturbance angle ($\theta_{SFS}$).

10. The method according to claim 8 or 9, wherein disturbing the determination of the control parameters (ird_ref, irq_ref) comprises disturbing the determination of the rotating reference frame by an disturbance angle ($\theta_{FS}$) such that the rotating reference frame is no longer synchronous with the grid frequency.

11. The method according to claim 10, wherein the determination of the rotating reference frame is based on a phase angle ($\theta$) of the grid voltage determined by means of a phase locked loop (50), wherein disturbing the determination of the rotating reference frame comprises introducing the disturbance angle ($\theta_{FS}$) in the determination of the phase angle ($\theta$) by the phase locked loop (50).

12. The method according to any of claims 7-11, wherein the power generating system (100) comprises a doubly fed induction generator (110), wherein the power converter (120) is coupled to a rotor (111) of the doubly fed induction generator (120) and is configured to control rotor currents in the rotor (111) to thereby control the AC frequency of AC electrical power provided by the doubly fed induction generator (120) to the power grid (200).

13. The method according to any of claims 7-11, wherein the power converter is a full power converter coupled to an output of a generator and configured to convert the power generated by the generator, wherein the power converter comprises a grid side converter, wherein the disturbance comprises a disturbance of the AC frequency of AC electrical power provided by the grid side converter to the power grid (200).

14. A control system (10) for detecting an islanding operation of a power generation system (100), wherein the control system (10) is configured to perform the method according to any of the preceding claims, and wherein the power generation system (100) is preferably a wind turbine or a wind farm.

15. A computer program for detecting an islanding operation of a power generating system (100), wherein the computer program comprises control instructions which, when executed by a processing unit of a control unit (10) of the power generating system (100), cause the control unit (10) to perform the method of any one of claims 1 to 13.

FIG 1

FIG 2

FIG 3

FIG 4

EP 3 945 653 A1

# FIG 5

EP 3 945 653 A1

# FIG 6

```
                    ┌─────────────┐
                    │    Start    │
                    └─────────────┘
                           │
                           ▼
┌──────────────────────────────────────────────────────┐
│        Monitor frequency ωL of power grid              │──601
└──────────────────────────────────────────────────────┘
                           │
                           ▼
┌──────────────────────────────────────────────────────┐
│  Monitor reactive power Q at the coupling to the power grid │──602
└──────────────────────────────────────────────────────┘
                           │
                           ▼
┌──────────────────────────────────────────────────────┐
│            Determine df/dt and dQ/dt                   │──603
└──────────────────────────────────────────────────────┘
                           │
                           ▼
┌──────────────────────────────────────────────────────┐
│  Determine detection parameter ROCOFQ based on determined │──604
│                df/dt and dQ/dt                         │
└──────────────────────────────────────────────────────┘
                           │
                           ▼
                        605
                    ◇─────────────◇
         no         │  ROCOFQ >    │
  ◄─────────────────│  passive islanding │
                    │  threshold?  │
                    ◇─────────────◇
                           │ yes
                           ▼
┌──────────────────────────────────────────────────────┐
│            Islanding operation detected                │──606
└──────────────────────────────────────────────────────┘
                           │
                           ▼
┌──────────────────────────────────────────────────────┐
│ Take mitigation action (adjust controller operation for islanding │──607
│   operation / stop operation of power generating system) │
└──────────────────────────────────────────────────────┘
                           │
                           ▼
                    ┌─────────────┐
                    │     End     │
                    └─────────────┘
```

FIG 7

```
                    ┌─────────────┐
                    │    Start    │
                    └─────────────┘
                           │
                           ▼
┌─────────────────────────────────────────────────────────┐
│ Introduce disturbance into AC frequency of the electrical power │──701
│         provided by the power generating system          │
└─────────────────────────────────────────────────────────┘
                           │
                           ▼
┌─────────────────────────────────────────────────────────┐
│           Monitor frequency ωL of power grid             │──702
└─────────────────────────────────────────────────────────┘
                           │
                           ▼
┌─────────────────────────────────────────────────────────┐
│    Monitor reactive power Q at the coupling to the power grid    │──703
└─────────────────────────────────────────────────────────┘
                           │
                           ▼
┌─────────────────────────────────────────────────────────┐
│                 Determine df/dt and dQ/dt                │──704
└─────────────────────────────────────────────────────────┘
                           │
                           ▼
┌─────────────────────────────────────────────────────────┐
│  Determine detection parameter ROCOFQ based on determined │──705
│                    df/dt and dQ/dt                       │
└─────────────────────────────────────────────────────────┘
                           │
                           ▼
                       ◇ 706
              ROCOFQ >
   no         active islanding
              threshold?
                           │ yes
                           ▼
┌─────────────────────────────────────────────────────────┐
│               Islanding operation detected               │──707
└─────────────────────────────────────────────────────────┘
                           │
                           ▼
┌─────────────────────────────────────────────────────────┐
│ Take mitigation action (adjust controller operation for islanding │──708
│   operation / stop operation of power generating system) │
└─────────────────────────────────────────────────────────┘
                           │
                           ▼
                    ┌─────────────┐
                    │     End     │
                    └─────────────┘
```

## FIG 8

```
                    ┌─────────┐
                    │  Start  │
                    └────┬────┘
                         ▼
    ┌───────────────────────────────────────────────┐
    │      Monitor frequency ωL of power grid        │──801
    └───────────────────────┬───────────────────────┘
                            ▼
    ┌───────────────────────────────────────────────┐
    │ Monitor reactive power Q at the coupling to the│──802
    │                power grid                      │
    └───────────────────────┬───────────────────────┘
                            ▼
    ┌───────────────────────────────────────────────┐
    │            Determine df/dt and dQ/dt           │──803
    └───────────────────────┬───────────────────────┘
                            ▼
    ┌───────────────────────────────────────────────┐
    │ Determine detection parameter ROCOFQ based on  │──804
    │        determined df/dt and dQ/dt              │
    └───────────────────────┬───────────────────────┘
                            ▼
```

810
┌──────────────┐     no    ╱  805  ROCOFQ >
│ Operate in   │◄──────────  activation
│ passive      │             threshold?
│ detection    │                 │ yes
│ mode         │                 ▼
└──────────────┘            ╱ 806 ROCOFQ >
809                         active islanding
┌──────────────────┐   no   threshold?
│ Introduce        │◄───────      │ yes
│ disturbance into │              ▼
│ AC frequency of  │   ┌─────────────────────────┐
│ the electrical   │   │ Islanding operation      │──807
│ power provided by│   │ detected                 │
│ the power        │   └───────────┬─────────────┘
│ generating system│               ▼
└──────────────────┘   ┌─────────────────────────┐
                       │ Take mitigation action   │──808
                       │ (adjust controller       │
                       │ operation for islanding  │
                       │ operation / stop operation│
                       │ of power generating      │
                       │ system)                  │
                       └───────────┬─────────────┘
                                   ▼
                              ┌─────────┐
                              │   End   │
                              └─────────┘

# FIG 9

# FIG 10

Europäisches
Patentamt

European
Patent Office

Office européen
des brevets

# EUROPEAN SEARCH REPORT

Application Number

EP 20 38 2699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALAM M R ET AL: "A short length window-based method for islanding detection in distributed generation", NEURAL NETWORKS (IJCNN), THE 2012 INTERNATIONAL JOINT CONFERENCE ON, IEEE, 10 June 2012 (2012-06-10), pages 1-6, XP032210178, DOI: 10.1109/IJCNN.2012.6252483 ISBN: 978-1-4673-1488-6 | 1,14,15 | INV. H02J3/00 H02J3/38 |
| Y | * abstract * * page 2 * * figure 5 * | 2,5,7,8, 12,13 | |
| X | TRAN QUOC-TUAN: "New methods of islanding detection for photovoltaic inverters", 2016 IEEE PES INNOVATIVE SMART GRID TECHNOLOGIES CONFERENCE EUROPE (ISGT-EUROPE), 1 October 2016 (2016-10-01), pages 1-5, XP055758105, DOI: 10.1109/ISGTEurope.2016.7856317 * abstract * * table 1 * * page 3, left-hand column, paragraph 4 - right-hand column, paragraph 3 * | 1,14,15 | |
| | | | TECHNICAL FIELDS SEARCHED (IPC) |
| | | | H02J |
| Y | RAZA SAFDAR ET AL: "A Sensitivity Analysis of Different Power System Parameters on Islanding Detection", IEEE TRANSACTIONS ON SUSTAINABLE ENERGY, IEEE, USA, vol. 7, no. 2, 1 April 2016 (2016-04-01), pages 461-470, XP011604064, ISSN: 1949-3029, DOI: 10.1109/TSTE.2015.2499781 [retrieved on 2016-03-21] * abstract * * figure 5 * | 2 | |

-/--

The present search report has been drawn up for all claims

| Place of search | Date of completion of the search | Examiner |
|---|---|---|
| Munich | 9 December 2020 | Hurtado-Albir, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 38 2699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHOU BIN ET AL: "Hybrid islanding detection method based on decision tree and positive feedback for distributed generations", IET GENERATION, TRANSMISSION&DISTRIBUTION, IET, UK, vol. 9, no. 14, 5 November 2015 (2015-11-05), pages 1819-1825, XP006053964, ISSN: 1751-8687, DOI: 10.1049/IET-GTD.2015.0069 * abstract * * "2.2 Positive feedback schemes"; page 1820 * * figure 2 * | 5,7,8, 12,13 | |
| A | US 2015/249416 A1 (BARKER SIDNEY ALLEN [US]) 3 September 2015 (2015-09-03) * abstract * * figures * | 1,12,13 | |
| A | TUAN TRAN-QUOC ET AL: "Behaviour of grid-connected photovoltaic inverters in islanding operation", 2011 IEEE TRONDHEIM POWERTECH : TRONDHEIM, NORWAY, 19 - 23 JUNE 2011, IEEE, PISCATAWAY, NJ, 19 June 2011 (2011-06-19), pages 1-8, XP032263491, DOI: 10.1109/PTC.2011.6019267 ISBN: 978-1-4244-8419-5 * the whole document * | 1-15 | **TECHNICAL FIELDS SEARCHED (IPC)** |

The present search report has been drawn up for all claims

| Place of search | Date of completion of the search | Examiner |
|---|---|---|
| Munich | 9 December 2020 | Hurtado-Albir, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 945 653 A1**

## ANNEX TO THE EUROPEAN SEARCH REPORT
## ON EUROPEAN PATENT APPLICATION NO.

EP 20 38 2699

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2020

| Patent document cited in search report | Publication date | Patent family member(s) | Publication date |
|---|---|---|---|
| US 2015249416 A1 | 03-09-2015 | US 2015249416 A1<br>WO 2015130543 A1 | 03-09-2015<br>03-09-2015 |

EPO FORM P0459

For more details about this annex : see Official Journal of the European Patent Office, No. 12/82